# EUROPÄISCHE PATENTSCHRIFT

(11) **EP 0 669 027 B1**
(45) Veröffentlichungstag und Bekanntmachung des Hinweises auf die Patenterteilung: **27.08.1997**
(21) Anmeldenummer: 93924020.6
(22) Anmeldetag: 04.11.1993
(51) Int. Cl.: G06F 12/06, G06F 13/42

(54) **ANORDNUNG ZUR ADRESSIERUNG VON PERIPHEREN EINHEITEN**
ARRANGEMENT FOR THE ADDRESSING OF PERIPHERAL UNITS
AGENCEMENT POUR L'ADRESSAGE D'UNITES PERIPHERIQUES

(30) Priorität: 11.11.1992 DE 4238075
(43) Veröffentlichungstag der Anmeldung: 30.08.1995
(73) Patentinhaber: SIEMENS AKTIENGESELLSCHAFT, 80333 München (DE)
(72) Erfinder: ABERT, Michael, D-76474 Au (DE); BLOCK, Siegfried, D-76870 Kandel (DE); BOZENHARDT, Johannes, D-76275 Ettlingen (DE); LEIGSNERING, Franz, D-76275 Ettlingen (DE); PFATTEICHER, Werner, D-76327 Pfinztal (DE); SCHEWE, Franz-Clemens, D-76227 Karslruhe (DE)
(86) Internationale Anmeldenummer: DE9301054
(87) Internationale Veröffentlichungsnummer: WO9411825

(56) Entgegenhaltungen:
- EP-A- 0 173 746
- COMPUTER TECHNOLOGY REVIEW Bd. IX, Nr. 6 , 1989 , LOS ANGELES US Seiten 63, 64, 66 LARSEN 'Unique memory mapper improves performance of PC architectures'
- IBM TECHNICAL DISCLOSURE BULLETIN Bd. 34, Nr. 12 , Mai 1992 , NEW YORK US Seiten 8 - 11 'Programmable address extension method for a microprocessor'
- IBM TECHNICAL DISCLOSURE BULLETIN Bd. 28, Nr. 7 , Dezember 1985 , NEW YORK US Seiten 2781 - 2782 'Simultaneous multiple-address space feature'
- IBM TECHNICAL DISCLOSURE BULLETIN Bd. 28, Nr. 7 , Dezember 1985 , NEW YORK US
- Seiten 2781 - 2782 'Simultaneous multiple-address space feature'

## Beschreibung

Die Erfindung betrifft eine Anordnung zur Übertragung von Daten über einen Bus mit einer Zentraleinheit und mehreren an den Bus angeschlossenen peripheren Einheiten nach dem Oberbegriff des Anspruchs 1.

Aus der DE-OS 33 47 357 ist bekannt, daß in einem Bus-system mit einer Zentraleinheit und mehreren an den Bus angeschlossenen peripheren Einheiten zunächst den einzelnen Baugruppen Adressen zugeordnet werden müssen. Die Einheiten sind dort Steckbaugruppen in einem Baugruppenträger. Ihre Adressen werden ihnen als Steckplatzkennungen über Geber an den einzelnen Steckplätzen mitgeteilt. Während einer Initialisierungsphase werden alle Baugruppen über die Steckplatzkennungen aufgerufen und teilen der Zentraleinheit ihre jeweiligen Baugruppenkennungen mit. Daraufhin werden den Baugruppen von der Zentraleinheit wiederum über Adressierung der Steckplatzkennungen jeweils logische Adressen übermittelt, die abhängig von der zuvor gelesenen Baugruppenkennung für den weiteren Datenaustausch mit den einzelnen Baugruppen verwendet werden. Die logischen Adressen können unabhängig von der Steckplatzkennung wahlfrei vergeben werden. Sie werden in Speicherzellen der Baugruppen abgelegt und bei jeder Datenübertragung zum Vergleich mit der aktuellen Adresse auf dem Bus herangezogen. Die Steckplatzkennung mit einem Geber vermeidet manuelle Eingriffe zur Adressenzuordnung, die z. B. bei einer Zuordnung durch Einsetzen elektrischer Brücken oder programmierter Festwertspeicher auf den einzelnen Baugruppen erforderlich sind. Nachteilig ist bei dieser Einrichtung aber, daß auf jeder peripheren Einheit ein Speicher für die logischen Adressen sowie eine Einrichtung zur Auswertung der Adressen und der Gebersignale benötigt wird.

Aus COMPUTER TECHNOLOGY REVIEW, Bd. IX, NR. 6, 1989, LOS ANGELES US, Seiten 63, 64, 66, LARSEN "Unique memory mapper improves performance of PC architecture" ist eine Architektur eines Personalcomputer bekannt, bei der virtuelle Adressen mit Hilfe von Memory Mapping in physikalische Adressen umgesetzt werden. Dabei sind die Register, die zum Memory Mapping verwendet werden, überbrückbar. Dieses Memory Mapping dient zur Vergrößerung des von einem Prozessor adressierbaren Speicherraums und nicht dazu, periphere Einheiten direkt über ihre physikalischen Adressen ansprechen zu können.

Aus EP-A-0 173 746 ist eine Anordnung zur Adressierung von peripheren Einheiten bekannt, die zur Übertragung von Daten über einen Bus an eine Zentraleinheit angeschlossen sind und denen jeweils ein physikalischer Adreßbereich zugeordnet ist, dessen Lage im physikalischen Adreßraum jeweils durch die Anschlußstelle der peripheren Einheit am Bus festgelegt ist, wobei eine Einheit zur Umsetzung logischer Adressen, welche in der Zentraleinheit verwendet werden, in physikalische Adressen in der Zentraleinheit dem Bus vorgeschaltet ist.

Der Erfindung liegt die Aufgabe zugrunde, eine Anordnung zur Übertragung von Daten über einen Bus zu schaffen, die mit geringem Aufwand eine Adressierung peripherer Einheiten durch eine Zentraleinheit mit wahlfreier Vergabe der Adressen ermöglicht.

Zur Lösung dieser Aufgabe weist die neue Anordnung der eingangs genannten Art die im kennzeichnenden Teil des Anspruchs 1 genannten Merkmale auf. In den Unteransprüchen sind vorteilhafte Ausführungsformen der Erfindung angegeben.

Die Erfindung hat den Vorteil, daß bei Verwendung eines festen Adreßrasters die Gesamtheit der einzelnen Adreßräume der peripheren Einheiten aus der Sicht der Zentraleinheit auf einen lückenlos zusammenhängenden logischen Adreßraum abbildbar ist. Insbesondere in Automatisierungsgeräten ist es vorteilhaft, daß prozeßbeschreibende Daten, die sinnvoll zusammenhängend betrachtet werden, unter fortlaufenden logischen Adressen angeordnet werden können.

Da die physikalischen Adressen einer peripheren Einheit im physikalischen Adreßraum durch ihre Anschlußstelle am Bus, insbesondere durch ihren Steckplatz im Baugruppenträger, festgelegt sind, ist eine einfache Erkennung der Konfiguration über das Bussystem durch Lesen besonderer Identifikationsdaten der Einheiten möglich. Dazu kann die Umsetzeinheit vorteilhaft überbrückbar ausgeführt oder vor einer Initialisierung derart vorbesetzt sein, daß die physikalischen Adressen mit den logischen übereinstimmen.

Bei direkter Adressierung über die physikalische Adresse ist der Programmcode des Anwenderprogramms abhängig von der Konfiguration des Bussystems. Bei jedem Umstecken von Baugruppen müssen die Datenadressen im Anwenderprogramm geändert werden. Dies wird erfindungsgemäß vermieden; lediglich die Einheit zur Umsetzung logischer Adressen in physikalische Adressen, die in der Zentraleinheit dem Bus-system vorgeschaltet ist, muß neu programmiert werden.

Besonders einfach ist die Realisierung der Umsetzeinheit als ladbarer Speicher (RAM), auf dessen Adreßeingänge die logischen Adressen geführt sind und der an seinen Daten-ausgängen die physikalischen Adressen ausgibt. Durch die Zuordnung unterschiedlicher physikalischer Adressen bei logisch adreßgleichen lesenden und schreibenden Zugriffen auf periphere Einheiten kann insbesondere bei Automatisierungsgeräten in vorteilhafter Weise berücksichtigt werden, daß sowohl Baugruppen zur Meßwerterfassung als auch zur Ausgabe von Stellgrößen vorhanden sind, die somit über dieselbe logische Adresse angesprochen werden können.

Wenn ein Meßumformer von dem Meßwerterfassungsmodul abgenommen ist, kann mit einem Signal der Umsetzeinheit in Abhängigkeit von der logischen Adresse ein lesender Zugriff der Zentraleinheit auf die Adresse dieses Meßumformers auf eine Simulationseinheit, eine redundante Einheit oder auf eine Speicherzelle umgelenkt werden, die einen vorher eingestellten Ersatzwert für das Meßergebnis enthält. Damit sind auch Servicearbeiten während des Betriebs möglich.

Insbesondere bei der Inbetriebnahme eines Automatisierungsgerätes ist die Erzeugung eines weiteren Signals vorteilhaft, das bei Zugriffen auf bestimmte logische Adressen ausgegeben wird. Mit dessen Hilfe können z. B. auf einfache Weise Unterbrechungen zum Prüfen und Überarbeiten des Anwenderprogramms eingefügt werden.

Mit besonders wenig Aufwand kann die Steckplatzadressierung durch Stichleitungen realisiert werden, die bei einem Zugriff auf eine Adresse aus dem physikalischen Adreßbereich der Steckplätze aktiviert werden. Kontakte für Geber zur Steckplatzkennung können dabei entfallen. Zweckmäßig ist ein Adreßdecoder in der Zentraleinheit zur Aktivierung der Stichleitungen in Abhängigkeit von den physikalischen Adressen angeordnet.

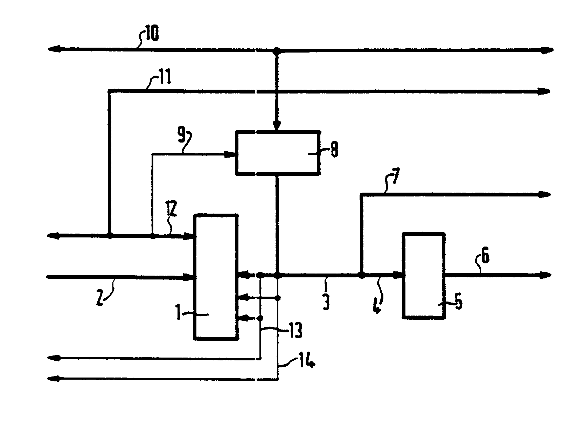

Anhand der Zeichnung, in der ein Ausführungsbeispiel der Erfindung dargestellt ist, werden im folgenden die Erfindung sowie Ausgestaltungen und Vorteile näher erläutert.

Einer Umsetzeinheit 1 werden über ein Leitungsbündel 2 logische Adressen zugeführt, denen sie auf einem Leitungsbündel 3 physikalische Adressen zuordnet. Einen Teil 4 des Leitungsbündels 3 erhält ein Decoder 5, der ermittelt, auf welchen Steckplatz mit der physikalischen Adresse zugegriffen werden soll, und der die entsprechende Leitung von Stichleitungen 6 aktiviert. Ein weiterer Teil 7 des Leitungsbündels 3 dient zur Adressierung der Speicherzellen auf den einzelnen Baugruppen. Die Umsetzeinheit 1 ist als Speicher ausgeführt, auf dessen Adreßeingänge das Leitungsbündel 2 gelegt ist. Die physikalischen Adressen entsprechen dem Speicherinhalt und werden an den Datenein- bzw. -ausgängen des Speichers abgegriffen. Für jede logische Adresse, welche die Zentraleinheit über das Leitungsbündel 2 an den Speicher anlegt, wird der Dateninhalt der adressierten Speicherzelle als physikalische Adresse ausgegeben. Selbstverständlich muß der Speicher zuvor entsprechend programmiert worden sein. In dem dargestellten Ausführungsbeispiel der Erfindung kann der Speicher im eingebauten Zustand geladen werden. Dazu ist eine Torschaltung 8 vorgesehen, welche zur Programmierung der Umsetzeinheit 1 durch ein Signal auf einer Leitung 9 freigeschaltet wird und die Datenleitungen 10 der in der Figur nicht dargestellten Zentraleinheit auf das Leitungsbündel 3 schaltet. Während des Ladevorgangs werden die peripheren Einheiten durch eine ebenfalls nicht dargestellte Trennstufe entkoppelt. Im Normalfall werden die Datenleitungen 10 ebenso wie Steuerleitungen 11 direkt zu den peripheren Einheiten bzw. Steckbaugruppen geführt. Ein Teil 12 der Steuerleitungen 11, u. a. ein Signal zur Unterscheidung von schreibenden oder lesenden Zugriffen, wird zur Steuerung der Umsetzeinheit 1 benötigt. Die Unterscheidung zwischen schreibenden und lesenden Zugriffen ist insbesondere in einem Automatisierungsgerät vorteilhaft, da bei gleicher logischer Adresse ein Lesezugriff auf eine andere physikalische Adresse, z. B. einer Analogwerterfassungsbaugruppe, umgelenkt wird als ein beispielsweise auf eine Digitalausgabe gerichteter Schreibzugriff. In Automatisierungsgeräten wird in bestimmten Situationen nicht auf reale Prozeßdaten zugegriffen, sondern auf Werte von redundanten Datenquellen oder auf sogenannte Ersatzwerte, die als vorbestimmte Werte in Speicherzellen abgelegt sind. Dazu dient eine Steuerleitung 13, welche die Umsetzeinheit 1 liefert. Eine weitere Steuerleitung 14 zeigt an, ob auf eine bestimmte logische Adresse zugegriffen wird. Dies ist nützlich zur Programmierung von Haltepunkten oder zur Erkennung von Zugriffen auf verbotene logische Adressen.

Statt mit nur einer Zentraleinheit können nach der Erfindung auch mehrere Zentraleinheiten vorgesehen werden.

## Patentansprüche

1. Anordnung zur Adressierung von peripheren Einheiten, die zur Übertragung von Daten über einen Bus an eine Zentraleinheit angeschlossen sind und denen jeweils ein physikalischer Adreßbereich zugeordnet ist, dessen Lage im physikalischen Adreßraum jeweils durch die Anschlußstelle der peripheren Einheit am Bus festgelegt ist, wobei eine Einheit (1) zur Umsetzung logischer Adressen, welche in der Zentraleinheit verwendet werden, in physikalische Adressen in der Zentraleinheit dem Bus vorgeschaltet ist,
**dadurch gekennzeichnet,**
- daß die Umsetzeinheit (1) überbrückbar ist, so daß die logischen Adressen auf den Bus geführt sind,
- daß die Einheiten über das Bussystem lesbare Identifikationsdaten enthalten und
- daß die Umsetzeinheit (1) einer logischen Adresse bei lesenden und schreibenden Zugriffen der Zentraleinheit unterschiedliche physikalische Adressen zuordnet.

2. Anordnung nach Anspruch 1, **dadurch gekennzeichnet,**
- daß die Umsetzeinheit (1) ein Signal in Abhängigkeit von der logischen Adresse erzeugt zur wahlweisen Steuerung der Zugriffe auf die peripheren Einheiten oder auf Speicherzellen in der Zentraleinheit, die Ersatzwerte der Daten enthalten.

3. Anordnung nach Anspruch 1, **dadurch gekennzeichnet,**
- daß die Umsetzeinheit (1) ein Signal in Abhängigkeit von der logischen Adresse erzeugt zur Erkennung von Zugriffen auf bestimmte Adressen.

4. Anordnung nach einem der vorhergehenden Ansprüche, **dadurch gekennzeichnet,**
- daß die Umsetzeinheit (1) einen Speicher enthält, auf dessen Adreßeingänge die logischen Adressen geführt sind und der an seinen Datenausgängen die physikalischen Adressen ausgibt.

5. Anordnung nach Anspruch 4, **dadurch gekennzeichnet,**
- daß der Speicher ladbar ist.

6. Anordnung nach einem der vorhergehenden Ansprüche, **dadurch gekennzeichnet**,
- daß die Zentraleinheit und die peripheren Einheiten Steckbaugruppen in einem Baugruppenträger sind und
- daß die Lage des physikalischen Adreßbereichs einer Steckbaugruppe durch den Steckplatz im Baugruppenträger festgelegt wird.

7. Anordnung nach Anspruch 6, **dadurch gekennzeichnet**,
- daß zu jedem Steckplatz eine Stichleitung führt und
- daß in der Zentraleinheit ein Adreßdecoder (5) vorhanden ist, der bei einem Zugriff auf eine Adresse aus dem physikalischen Adreßbereich einer Steckbaugruppe die entsprechende Stichleitung aktiviert.

8. Anordnung nach einem der vorhergehenden Ansprüche, **dadurch gekennzeichnet**,
- daß sie in einem Automatisierungsgerät verwendet wird.

## Claims

1. Arrangement for addressing peripheral units which are connected to a central unit for the transmission of data by way of a bus and to which there is allocated in each case a physical address region, the position of which in the physical address space is in each case established by the point of connection of the peripheral unit on the bus, whereby a unit (1) for converting logical addresses, which are used in the central unit, into physical addresses is upstream of the bus in the central unit,
characterized in that
- the conversion unit (1) can be short-circuited, so that the logical addresses are carried on to the bus,
- the units contain identification data which can be read by way of the bus system and
- the conversion unit (1) allocates different physical addresses to a logical address during reading and writing accesses of the central unit.

2. Arrangement according to claim 1,
characterized in that the conversion unit (1) generates a signal as a function of the logical address for the optional control of the accesses to the peripheral units or to memory cells in the central unit which contain substitute values of the data.

3. Arrangement according to claim 1,
characterized in that the conversion unit (1) generates a signal as a function of the logical address to identify accesses to certain addresses.

4. Arrangement according to one of the preceding claims, characterized in that the conversion unit (1) includes a memory, on the address inputs of which the logical addresses are carried and which emits the physical addresses at its data outputs.

5. Arrangement according to claim 4,
characterized in that the memory can be loaded.

6. Arrangement according to one of the preceding claims, characterized in that the central unit and the peripheral units are plug-in modules in a mounting rack and in that the position of the physical address region of a plug-in module is established by the module location in the mounting rack.

7. Arrangement according to claim 6,
characterized in that a stub line leads to each module location and in that in the central unit an address decoder (5) is present which, during an access to an address from the physical address region of a plug-in module, activates the appropriate stub line.

8. Arrangement according to one of the preceding claims, characterized in that it is used in a programmable controller.

## Revendications

1. Dispositif d'adressage d'unités périphériques, qui sont connectées pour la transmission de données par l'intermédiaire d'un bus à une unité centrale et à chacune desquelles est associée une zone d'adresses physiques, dont la position dans l'espace d'adressage physique est fixée par le point de raccordement de l'unité périphérique au bus, une unité (1) de conversion d'adresses logiques, qui sont utilisées dans l'unité centrale, en adresses physiques dans l'unité centrale étant branchée en amont du bus,
caractérisé en ce que
- l'unité (1) de conversion peut être pontée, de sorte que les adresses logiques soient mises sur le bus,
- les unités comprennent des données d'identification pouvant être lues par l'intermédiaire du système de bus, et
- l'unité (1) de conversion associe différentes adresses physiques à une adresse logique en cas d'accès en lecture et en écriture de l'unité centrale.

2. Dispositif suivant la revendication 1, caractérisé en ce que
- l'unité (1) de conversion produit un signal en fonction de l'adresse logique pour la commande au choix des accès aux unités périphériques ou à des cellules de mémoire à l'unité centrale qui comprennent des valeurs équivalentes des données.

3. Dispositif suivant la revendication 1, caractérisé en ce que
- l'unité (1) de conversion produit un signal en fonction de l'adresse logique pour la reconnaissance d'accès à des adresses déterminées.

4. Dispositif suivant l'une des revendications précédentes,
caractérisé en ce que
- l'unité (1) de conversion comprend une mémoire sur les entrées d'adresses de laquelle les adresses logiques sont appliquées et qui fournit sur ses sorties de données les adresses physiques.

5. Dispositif suivant la revendication 4, caractérisé en ce que
- la mémoire peut être chargée.

6. Dispositif suivant l'une des revendications précédentes,
caractérisé en ce que
- l'unité centrale et les unités périphériques sont des modules d'enfichage dans un support de modules et
- la position de la zone d'adressage physique d'un module d'enfichage est fixée par l'emplacement d'enfichage dans le support de modules.

7. Dispositif suivant la revendication 6, caractérisé en ce que
- une ligne de dérivation mène à chaque emplacement d'enfichage et
- il est prévu dans l'unité centrale un décodeur (5) d'adresses, qui active lors d'un accès à une adresse à partir de la zone d'adresses physiques d'un module d'enfichage la ligne de dérivation correspondante.

8. Dispositif suivant l'une des revendications précédentes,
caractérisé en ce que
- il est utilisé dans un appareil d'automatisation.
